# EUROPEAN PATENT SPECIFICATION

(11) **EP 3 971 462 B1**
(45) Date of publication and mention of the grant of the patent: **10.07.2024**
(21) Application number: 20197352.6
(22) Date of filing: 22.09.2020
(51) Int. Cl.: F16L 37/098, F24C 3/00, F23K 5/00

(54) **DOMESTIC APPLIANCE HAVING A GAS PIPE**
HAUSHALTSGERÄT MIT EINER GASLEITUNG
APPAREIL DOMESTIQUE COMPORTANT UN TUYAU DE GAZ

(43) Date of publication of application: 23.03.2022
(73) Proprietor: ELECTROLUX APPLIANCES AKTIEBOLAG, 105 45 Stockholm (SE)
(72) Inventor: EUSEPI, Riccardo, 47122 Forli (IT)
(74) Representative: Electrolux Group Patents

(56) References cited:
- DE-A1- 3 940 114
- DE-A1- 4 011 756
- DE-C1- 19 755 826
- US-A- 5 732 984

## Description

The present invention relates to a domestic appliance assembly.

Domestic appliances are known such as free-standing gas cookers or built-in gas cooking hobs, which require, in use, a controlled feeding of a gas to be burned to the domestic appliance itself. Therefore, a gas pipe is connected to the domestic appliance defining together with the domestic appliance a respective domestic appliance assembly. The gas pipe is also connectable to a gas supply source such as a gas bottle or a gas supply circuit of a housing environment.

When connecting the gas pipe to the domestic appliance it must be guaranteed that the gas pipe is correctly connected to the domestic appliance, which is needed for a safe and correct operation of the domestic appliance. During operation any possible removal of the gas pipe from the domestic appliance must be impeded. Typical connections, not used with domestic gas, are known from US 5 732 984.

It is e.g. known to tighten the gas pipe to the domestic appliance by using nuts or nipples and a threaded housing requiring mechanical work by an operator, which is a time-consuming activity. Furthermore, an inconvenience may arise in geographical locations, which lack qualified personnel for mounting the gas pipe to the domestic appliance.

Thus, a need is felt in the sector to improve the known gas pipes and/or the known domestic appliance assemblies.

In particular, a need is felt in the sector to improve the known gas pipes and/or the known domestic appliance assemblies so as to provide for a facilitated means of connecting gas pipes to respective domestic appliances.

One aim of the present invention is to provide for a gas pipe to overcome, in a straightforward manner, at least one of the aforementioned inconveniences.

Another aim of the present invention is to provide for a domestic appliance assembly to overcome, in a straightforward manner, at least one of the aforementioned inconveniences.

According to the present invention, there is provided a gas pipe according to the independent claim 1.

Preferred non-limiting embodiments of the gas pipe are claimed in the dependent claims directly or indirectly depending on claim 1.

According to the present invention, there is also provided a domestic appliance assembly according to claim 13.

Preferred non-limiting embodiments of the domestic appliance assembly are claimed in the claims directly or independently depending on claim 13.

In addition, according to the present invention, there is provided a domestic appliance assembly comprising a domestic appliance being a gas cooker or a gas hob having a gas inlet duct carrying and/or having an engagement surface and a gas pipe coupled to the domestic appliance. The gas pipe comprises at least a tube portion having an end section configured to be inserted into the gas inlet duct; and a locking element (externally) connected to the end section of the tube portion and configured to lock the end section within the gas inlet duct. The locking element comprises at least one abutment surface configured to abut against an engagement surface of the gas inlet duct for impeding a removal of the end section from the gas inlet duct after insertion of the end section into the gas inlet duct.

By providing for the locking element it is possible to impede the removal of the end portion and, hence, an uncontrolled disconnecting of the gas pipe from the domestic appliance is avoided.

It should be noted that according to the present invention, the end section is defined by the section of the tube portion, which after a (correct and complete) coupling of the gas pipe to the domestic appliance sits and/or is arranged within the gas inlet duct.

According to some preferred non-limiting embodiments, at least a terminal portion of the locking element is arranged within the gas inlet duct with the end section being inserted within the gas inlet duct. The locking element is configured to lock the end section and the terminal portion of the locking element within the gas inlet duct.

According to some preferred non-limiting embodiments, the locking element is moveable and/or controllable between an active configuration at which the abutment surface is adapted to abut against the engagement surface and an inactive configuration for allowing an introduction and/or removal of the end section into the gas inlet duct.

By controlling the locking element between the active configuration and the inactive configuration it is possible to insert and remove the end portion into and out of the gas inlet duct.

According to some preferred non-limiting embodiments, the locking element comprises an interaction surface configured to interact, during an insertion of the end section into the gas inlet duct, with the gas inlet duct, in particular an edge of the gas inlet duct, so as to move the locking element from the active configuration to the inactive configuration.

In this manner, it is possible to automatically control the locking element into the inactive configuration during an insertion of the end portion into the gas inlet duct. The user does not need to execute any other operation, but only needs to push the end portion into the gas inlet duct.

Preferentially, the interaction surface is configured such that during insertion of the end portion into the gas inlet duct, there is a gradual movement of the locking element from the active configuration to the inactive configuration.

According to some preferred non-limiting embodiments, the locking element is biased into the active configuration and, in use, the locking element moves and/or is moveable from the active configuration to the inactive configuration during insertion of the end section into the gas inlet duct and is based into the active configuration after insertion of the end section within the gas inlet duct. In this manner, it is guaranteed that after insertion of the end portion within the gas inlet duct, a (putative and/or hypothetical) movement of the end portion out of the gas inlet duct is immediately blocked.

According to some preferred non-limiting embodiments, the end portion extends along a longitudinal axis. The abutment surface is moveable into a direction transversal to the longitudinal axis for moving the locking element between the active configuration and the inactive configuration. In this manner, an easy means of controlling is realized. The position of the abutment surface determines the configuration of the locking element.

According to some preferred non-limiting embodiments, the locking element comprises a coupling portion, in particular a ring-shaped and/or annular coupling portion, being in contact with an outer surface of the end portion.

Preferentially, the coupling portion is connected to the end portion in a non-slidable manner. This allows to guarantee that a sliding movement of the coupling portion on the end portion is impeded and the axial position of the locking element is (substantially) fixed.

According to some preferred non-limiting embodiments, the end section comprises a first annular thickening and a second annular thickening being (axially) disposed from one another. The coupling portion is arranged between the first annular thickening and the second annular thickening, in particular for impeding an axial movement of the locking element. In this manner, any sliding movement of the coupling portion is avoided by the coupling portion being arranged between the first and the second annular thickening.

According to some preferred non-limiting embodiments, the locking element comprises at least one fin connected to and extending from the coupling portion and carrying the abutment surface.

Preferentially, the locking element comprises a plurality of fins each one connected to and extending from the coupling portion and each one carrying one respective abutment surface configured to abut against the engagement surface. In particular, the fins are equally spaced angularly around a central axis of the coupling portion.

According to some preferred non-limiting embodiments, the coupling portion and the end section are coaxial to one another.

According to some preferred non-limiting embodiments, the coupling portion comprises a side-cut for arranging the locking element on the end portion.

In addition, according to the present invention, there is provided a domestic appliance assembly comprising a domestic appliance having a gas inlet duct carrying and/or having an engagement surface and a gas pipe comprising at least a tube portion having an end section configured to be inserted into the gas inlet duct; and a locking element (externally) connected to the end section of the tube portion and configured to lock the end section within the gas inlet duct. The locking element comprises at least one abutment surface configured to abut against the engagement surface for impeding a removal of the end section from the gas inlet duct after insertion of the end section into the gas inlet duct.

The locking element impedes the (unwanted) removal of the end portion and, hence, the (uncontrolled) disconnecting of the gas pipe from the domestic appliance as the abutment surface abuts against the engagement surface.

According to some preferred non-limiting embodiments, at least a terminal portion of the locking element is arranged within the gas inlet duct with the end section being inserted within the gas inlet duct. The locking element is configured to lock the end section and the terminal portion of the locking element within the gas inlet duct.

According to some preferred non-limiting embodiments, the locking element is moveable and/or controllable between an active configuration at which the abutment surface is adapted to abut against the engagement surface and an inactive configuration for allowing an introduction and/or removal of the end section into the gas inlet duct.

By controlling the locking element between the active configuration and the inactive configuration it is possible to insert and remove the end portion into and out of the gas inlet duct.

According to some preferred non-limiting embodiments, the locking element comprises an interaction surface configured to interact, during an insertion of the end section into the gas inlet duct, with the gas inlet duct so as to move the locking element from the active configuration to the inactive configuration.

In this manner, it is possible to automatically control the locking element into the inactive configuration during an insertion of the end portion into the gas inlet duct. The user does not need to execute any other operation, but only needs to push the end portion into the gas inlet duct.

Preferentially, the interaction surface is configured such that during insertion of the end portion into the gas inlet duct, there is a gradual movement of the locking element from the active configuration to the inactive configuration.

According to some preferred non-limiting embodiments, the locking element is biased into the active configuration and, in use, the locking element moves and/or is moveable from the active configuration to the inactive configuration during insertion of the end section into the gas inlet duct and is based into the active configuration after insertion of the end section within the gas inlet duct. In this manner, it is guaranteed that after insertion of the end portion within the gas inlet duct, the movement of the end portion out of the gas inlet duct is immediately blocked.

According to some preferred non-limiting embodiments, the end portion extends along a longitudinal axis. The abutment surface is moveable into a direction transversal to the longitudinal axis for moving the locking element between the active configuration and the inactive configuration. In this manner, an easy means of controlling is realized. The position of the abutment surface determines the configuration of the locking element.

According to some preferred non-limiting embodiments, the locking element comprises a coupling portion, in particular a ring-shaped and/or annular coupling portion, being in contact with an outer surface of the end portion.

Preferentially, the coupling portion is connected to the end portion in a non-slidable manner. This allows to guarantee that the coupling portion does not slide on the end portion and the axial position of the locking element is (substantially) fixed.

According to some preferred non-limiting embodiments, the end section comprises a first annular thickening and a second annular thickening being (axially) disposed from one another. The coupling portion is arranged between the first annular thickening and the second annular thickening, in particular for impeding an axial movement of the locking element. In this manner, any sliding movement of the coupling portion is avoided by the coupling portion being arranged between the first and the second annular thickening.

According to some preferred non-limiting embodiments, the locking element comprises at least one fin connected to and extending from the coupling portion and carrying the abutment surface.

Preferentially, the locking element comprises a plurality of fins each one connected to and extending from the coupling portion and each one carrying one respective abutment surface configured to abut against the engagement surface. In particular, the fins are equally spaced angularly around a central axis of the coupling portion.

According to some preferred non-limiting embodiments, the coupling portion and the end section are coaxial to one another.

According to some preferred non-limiting embodiments, the coupling portion comprises a side cut for arranging the locking element on the end portion.

According to some non-limiting embodiments, the gas inlet duct comprises an inner groove being at least partially delimited by the engagement surface.

According to some non-limiting embodiments, the gas inlet duct comprises an opening having a first radial extension and the inner groove comprises a second radial extension being larger than the first radial extension.

One non-limiting embodiment of the present invention will now be described, by way of example, with reference to the accompanying drawings, in which:
- Figure 1 is a schematic perspective view of portions of a domestic appliance assembly having at least one gas pipe according to the present invention, with parts removed for clarity;
- Figure 2 is a sectionized side-view of details of the domestic appliance assembly of Figure 1, with parts removed for clarity;
- Figure 3 is a perspective view of a detail of the gas pipe of Figures 1 and 2, with parts removed for clarity; and
- Figure 4 is a perspective view of a variation of the detail of Figure 3, with parts removed for clarity.

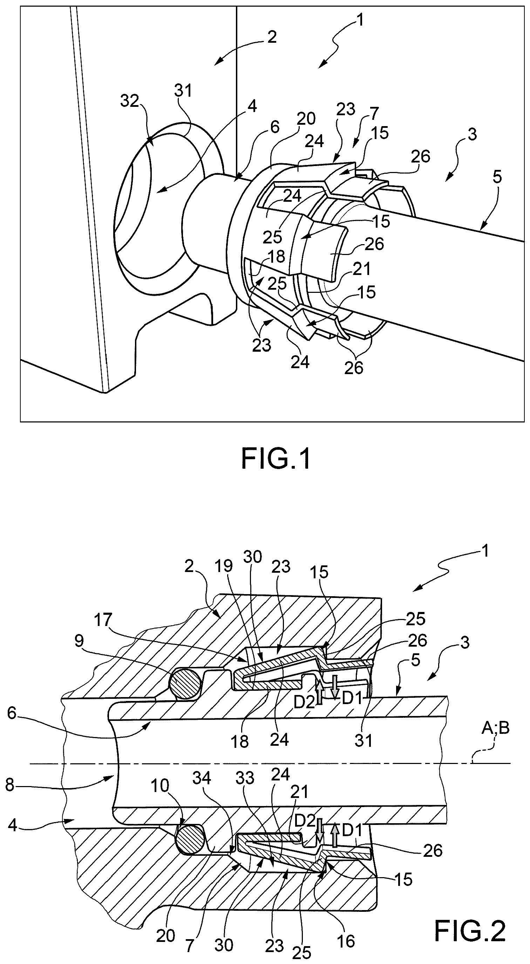

With particular reference to Figure 1, number 1 indicates as a whole a domestic appliance assembly comprising at least a domestic appliance 2 (only partially shown to the extend necessary for the comprehension of the present invention), such as a gas cooker or gas hob, and a gas pipe 3 connectable to and/or connected to (see Figure 2) domestic appliance 2.

In particular, gas pipe 3 is configured to supply and/or feed a gas to domestic appliance 2. Even more particular, gas pipe 3 is also connectable to a gas supply, such as e.g. a gas bottle or a gas supply circuit (of e.g. a housing location).

According to some non-limiting embodiments, domestic appliance 2 is of the free-standing type or the built-in type.

With particular reference to Figures 1 and 2, domestic appliance 2 comprises a gas inlet duct 4, in particular extending along a longitudinal axis A, hosting and/or being configured to receive and/or to host at least a portion of gas pipe 3 and configured to receive the gas from gas pipe 3, in particular for further distribution of the gas within domestic appliance 2. E.g. gas inlet duct 4 could be connected to further ducts configured to a feed the gas to a gas burning valve.

With particular reference to Figures 1 to 3, gas pipe 3 comprises at least:
- a tube portion 5, in particular being of a metallic material, such as aluminium or copper and, having an end section 6 configured to be inserted into gas inlet duct 4, in particular for feeding the gas into domestic appliance 2; and
- a locking element 7 (externally) connected to end section 6 and configured to lock and/or block end section 6 within gas inlet duct 4.

In particular, locking element 7 is configured to ensure that, once end section 6 sits and/or is inserted within gas inlet duct 4, an undesired decoupling and/or disconnection of gas pipe 3 from domestic appliance 2 is avoided.

In more detail, end section 6 comprises and/or carries an outlet 8 for allowing an outflow of the gas from tube portion 5 (and into gas inlet duct 4).

Preferentially, end section 6 and/or tube portion 5 extends along a longitudinal axis B, in particular defining a central axis. In particular, axes A and B are parallel, even more particular coaxial, to one another with end section 6 sitting within gas inlet duct 4.

Even more particular, in use, end portion 6 is inserted into gas inlet duct 4 by means of a movement of end portion 6 into an insertion direction parallel to axis A.

Preferentially, end section 6 and/or tube portion 5 has a cylindrical shape.

In particular, end section 6 is designed to fit into at least a portion of gas inlet duct 4.

According to some non-limiting embodiments, domestic appliance 2 or gas pipe 3 comprises a washer 9 configured to interact with end section 6 and gas inlet duct 4. In particular, washer 9 guarantees that with end section 6 being placed within gas inlet duct 4, no fluidic connection between end section 6 and an outer environment can occur.

Preferentially, washer 9 surrounds and sits on a part of end section 6 and is placed within a respective seat 10 of gas inlet duct 4.

Preferentially, washer 9 is placed within gas inlet duct 4 prior to insertion of end portion 6 into gas inlet duct 4.

Advantageously, locking element 7 comprises one or more abutment surfaces 15 configured to abut against an engagement surface 16 or respective engagement surfaces of gas inlet duct 4 for impeding a removal of end section 6 from gas inlet duct after insertion of end section 6 into gas inlet duct 4. In this manner, it is ensured that once tube portion 5 (and, accordingly gas pipe 3) is coupled to domestic appliance 2, any uncontrolled decoupling of tube portion 5 and/or gas pipe 3 is impeded.

In particular, abutment surfaces 15 are configured to abut against engagement surface 16 at least during a movement of end portion 6 into a removing direction opposed to the insertion direction. In such way, any possibility to further remove end portion 6 is blocked. Preferentially, locking element 7 is configured such to avoid any play of end portion 6 once being inserted in gas inlet duct 4.

Preferentially, at least a terminal portion 17 of locking element 7 is arranged within gas inlet duct 4 with end section 6 being inserted within gas inlet duct 4, so that end section 6 and terminal portion 17 are locked within gas inlet duct 4. In particular, terminal portion 17 carries abutment surfaces 15.

According to some non-limiting embodiments, locking element 7 is moveable and/or controllable between an active configuration at which abutment surfaces 15 are adapted to abut against engagement surface 16 and an inactive configuration for allowing an introduction and/or removal of end section 6 (and terminal portion 17) into gas inlet duct 4. In particular, in use, locking element 7 is moved into the inactive configuration for allowing an introduction of end section 6 (and terminal portion 17) into gas inlet duct 4. Preferentially, in use, locking element 7 is also controlled into the inactive configuration for allowing a removal of end section 6 (and terminal portion 17) from gas inlet duct 4.

In particular, after arrangement of end section 6 within gas inlet duct 4, abutment surfaces 15 are detached from engagement surface 16 when controlling and/or moving, in use, locking element 7 into the inactive configuration.

According to some non-limiting embodiments, locking element 7 comprises a coupling portion, in particular an annular and/or ring-shaped coupling portion 18, being connected to end section 6, in particular by being in contact with an outer surface 19 of end section 6. In particular, coupling portion 18 is connected to end section 6 such that a sliding movement of coupling portion 18 into a direction parallel to axis B is disabled and/or impeded.

In particular, coupling portion 18 is applied to end section 6 by means of co-axial sliding.

Preferentially, coupling portion 18 surrounds end section 6.

In particular, coupling portion 18 is coaxially arranged on end section 6. In other words, a central axis of coupling portion 18 is coaxial with axis B.

Preferentially, end section 6 comprises a first annular thickening 20 and a second annular thickening 21 being (axially) disposed from one another, and in particular defining a housing seat for coupling portion 18. In particular, coupling portion 18 is arranged between annular thickenings 20 and 21, in particular for impeding an axial movement of coupling portion 18 parallel to axis B (thereby, impeding also an axial movement of locking element 7). In particular, contact portion 18 contacts both annular thickening 20 and annular thickening 21.

According to some non-limiting embodiments, locking element 7 comprises one or more fins 23, each one connected to and extending from coupling portion 18 and carrying one respective abutment surface 15.

Preferentially, fins 23 are equally spaced angularly around a central axis of coupling portion 18.

Preferentially, each fin 23 comprises a first end being connected to coupling portion 18 and a second end opposed to the first end.

Preferably, a first (radial) distance between each first end and outer surface 19 is smaller than a second (radial) distance between the respective abutment surface 15 and outer surface 19 and/or a third (radial) distance between the respective second end and outer surface 19 (the first, second and third (radial) distance being defined with respect to axis B and according to a respective reference axis perpendicular to axis B).

Preferentially, each fin 23 extends from coupling portion 18 so that each fin 23 and coupling portion define and/or describe a respective angle being larger than 0° and smaller than 90°.

In particular, each fin 23 is connected to coupling portion 18 in a deformable and/or moveable manner, in particular so as to allow for moving the respective abutment surface 15 to or away from outer surface 19 (i.e. for modifying the second distance).

Preferentially, each fin 23 comprises a first plate portion 24 being connected to coupling portion 18 and carrying the respective first end and a second plate portion 25 protruding from first plate portion 24 in an inclined manner (and towards outer surface 19) and having the respective abutment surface 15.

Preferably, each fin 23 also comprises a third plate portion 26 connected and protruding from the respective second plate portion 25 (and away from the respective first plate portion 24). In particular, each third plate portion 26 and the respective second plate portion 25 are inclined with respect to one another.

Preferably, terminal portion 17 comprises coupling portion 18 and at least a respective section of each fin 23. In particular, terminal portion 17 also comprises first plate portions 24, second plate portions 25 and at least partially third plate portions 26.

In particular, with end section 6 being arranged within gas inlet duct 4 a portion of each third plate portion 26 is accessible (e.g. to an operator) and/or is arranged outside of gas inlet duct 4.

According to some preferred non-limiting embodiments, locking element 7 is biased in the active configuration.

In particular, in use, locking element 7 moves and/or is moveable from the active configuration to the inactive configuration during insertion of end section 6 into gas inlet duct 4 and is based into the active configuration after insertion of end section 6 within gas inlet duct 4 for locking end section 6 within gas inlet duct 4.

According to some preferred non-limiting embodiments, each abutment surface 15 and/or each fin 23 is moveable into a respective direction D1 transversal to axis B or into a respective direction D2 opposed to direction D1 for moving and/or controlling locking element 7 between the active configuration and the inactive configuration.

In particular, movement of each abutment surface 15 into the respective direction D1 and into the respective direction D2 moves abutment surface 15 respectively towards and away from outer surface 19.

Preferentially, each abutment surface 15 is moveable into a first limit position and a second limit position, in particular at which abutment surface 15 is respectively distal from and adjacent to outer surface 19. In particular, locking element 6 is controlled in the active configuration and the inactive configuration with abutment surfaces 15 being arranged at respectively the corresponding first limit position and the corresponding second limit position.

According to some preferred non-limiting embodiments, gas pipe 3, in particular locking element 7, comprises one or more interaction surfaces 30 configured to interact, during an insertion of end section 6 (and partially of locking element 7) into gas inlet duct 4, with gas inlet duct 4, in particular with an edge 31 of gas inlet duct 4 delimiting an opening 32 of gas inlet duct 4, so as to move locking element 7 from the active configuration to the inactive configuration.

In particular, each fin 23, even more particular the respective first plate portion 24, comprises one respective interaction surface 30. Even more particular, in use, interaction surfaces 30 interact simultaneously with gas inlet duct 4, in particular edge 31.

In particular, each interaction surface 30 is configured such that the interaction of interaction surface 30 with gas inlet duct 4, in particular with edge 31, results in movement of the respective abutment surface 15 towards and/or to the second limit position.

Preferentially, each interaction surface 30 is configured such that, in use, during insertion of end section 6 into gas inlet duct 4, the respective abutment surface 15 is gradually moved from the respective first limit position to the respective second limit position.

In particular, each third plate portion 26 is configured to allow for manually (e.g. by a user pressing on the respective third plate portion 26) move abutment surfaces 15 to the respective second limit position. This can be useful in the case one wants to remove end portion 6 out of gas inlet duct 4 (by moving end portion 6 into the removal direction).

With particular reference to Figures 1 and 2, gas inlet duct 4 comprises an inner (annular) groove 33 being at least partially delimited by engagement surface 16 and by an auxiliary surface 34 of gas inlet duct 4 facing engagement surface 16. In particular, groove 33 is interposed between opening 32 and seat 10.

In particular, engagement surface 16 is closer to opening 32 than auxiliary surface 34. In other words, engagement surface 16 is interposed between auxiliary surface 34 and opening 32.

According to some preferred non-limiting embodiments, a first radial extension (with respect to axis A) of opening 32 is smaller than a second radial extension of groove 33 (with respect to axis A).

In particular, the first radial extension is such to allow for an introduction of end portion 6 into gas inlet duct 4. Furthermore, the first radial extension is such that interaction surfaces 30 interact with edge 31.

In use, gas pipe 3 is connected to domestic appliance 2 by placing end portion 6 within gas inlet duct 4, in particular by moving end portion 6 (and tube portion 5) into the insertion direction.

In particular, once end section 6 is arranged within gas inlet duct 4, locking element 7 interacts with gas inlet duct 4 so as to avoid any (uncontrolled) removal of end portion 6 out of gas inlet duct 4.

Even more particular, locking element 7 locks end portion 6 within gas inlet duct 4 by abutment surfaces 15 abutting against engagement surface 16, thereby blocking movement of end portion 6 out of gas inlet duct 4.

During the insertion of end portion 6 into gas inlet duct 4, locking element 7 is controlled from its active configuration to its inactive configuration. Once, end portion 6 is inserted within gas inlet duct 4, locking element 7 is biased into its active configuration so that abutment surfaces 15 abut against engagement surface 16.

In particular, during the insertion of end portion 6 into gas inlet duct 4, abutment surfaces 15 move, in particular by movement of the respective fins 23, into the respective direction D1. Even more particular, movement of abutment surface 15 into the respective direction D1 is controlled by interaction of the respective interaction surfaces 30 with gas inlet duct 4, in particular edge 31, and the continuous movement of end portion 6 into gas inlet duct 4 (and along the insertion direction). Alternatively, a user can direct abutment surfaces 15 into the respective direction D1 by pressing the respective third plate portions 26.

Even more particular, during the insertion of end portion 6 into gas inlet duct 4, abutment surfaces 15 move from the respective first limit position towards (and to) the respective second limit position.

Furthermore, after insertion of end portion 6 into gas inlet duct 4, abutment surfaces 15, in particular fins 23, move into the respective direction D2. In particular, abutment surfaces 15 move from the respective second limit position to the respective first limit position.

Once, end portion 6 is inserted within gas inlet duct 4, end portion 6 seals in cooperation with washer 9 any fluidic connection between outlet 8 and the outer environment.

Preferentially, removal of end portion 6 out of gas inlet duct 4 allows disconnecting gas pipe 3 from domestic appliance 2.

In particular, removal of end portion 6 out of gas inlet duct 4, requires to control and/or move locking element 7 from the active configuration into the inactive configuration, followed by a movement of end portion 6 into the removal direction and out of gas inlet duct 4.

Even more particular, control of locking element 7 into the inactive configuration is achieved by moving abutments surface 15 into the respective direction D1. E.g. this is achieved by pressing the third plate portions 26.

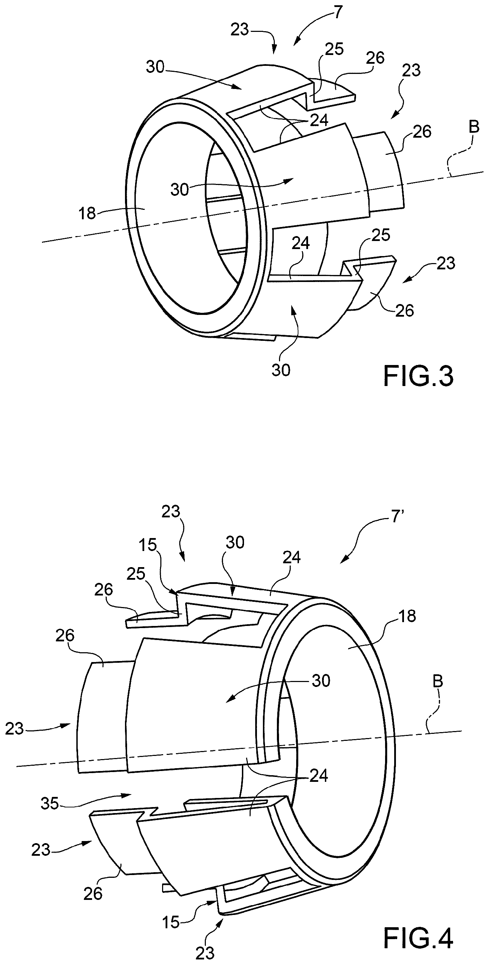

With particular reference to Figure 4, numeral 7' indicates a variant of the locking element of gas pipe 3. As locking element 7' is similar to locking element 7 the following description is limited to the differences between locking element 7' and locking element 7 using the same references for equivalent or similar parts.

In particular, locking element 7' differs from locking element 7 in that the respective coupling portion 18 comprises a side cut 35. In particular, side cut 35 allows an alternative means of arranging locking element 7' on end portion 6.

As the operation of gas pipe 3 having locking element 7' is similar to the operation of gas pipe 3 having locking element 7, we refer to the above-provided description.

The advantages of domestic appliance assembly 1 having gas pipe 3 and/or of gas pipe 3 according to the present invention will be clear from the foregoing description.

In particular, by relying on locking element 7 or 7' it is possible to couple gas pipe 3, in particular tube portion 5, to domestic appliance 2 by a simple axial movement of end portion 6 into gas inlet duct 4. Abutment of abutment surfaces 15 on engagement surface 16 impedes removal of end portion 6 from gas inlet duct 4.

An additional advantage is seen in that locking element 7 and 7' are biased in the active configuration. This guarantees that end portion 6 is locked within gas inlet duct 4, once insertion has been terminated.

Another advantage can be seen in that gas pipe 3 can be coupled to a domestic appliance 2 also by less trained personnel.

A further advantage resides in that the coupling of gas pipe 3 to domestic appliance 2 can also be realized by means of a robot.

Clearly, changes may be made to domestic appliance assembly 1 and/or gas pipe 3 without, however, departing from the scope of the present invention.

### List of Reference Numerals

- 1: Domestic appliance assembly
- 2: Domestic appliance
- 3: Gas pipe
- 4: Gas inlet duct
- 5: Tube portion
- 6: End section
- 7, 7': Locking element
- 8: Outlet
- 9: Washer
- 10: Seat
- 15: Abutment surface
- 16: Engagement surface
- 17: Terminal portion
- 18: Coupling portion
- 19: Outer surface
- 20: First annular thickening
- 21: Second annular thickening
- 23: Fins
- 24: First plate portion
- 25: Second plate portion
- 26: Third plate portion
- 30: Interaction surfaces
- 31: Edge
- 32: Opening
- 33: Inner groove
- 34: Auxiliary surface
- 35: Side-cut
- A: Longitudinal axis
- B: Longitudinal axis

## Claims

1. Domestic appliance assembly (1) comprising a domestic appliance (2) being a gas cooker or a gas hob having a gas inlet duct (4) carrying and/or having an engagement surface (16) and a gas pipe (3) coupled to the domestic appliance (2);
the gas pipe (3) comprises at least a tube portion (5) having an end section (6) inserted into the gas inlet duct (4);
the domestic appliance assembly (1) being **characterized in that** the gas pipe (3) comprises a locking element (7) connected to the end section (6) and locking the end section (6) within the gas inlet duct (4);
wherein the locking element (7) comprises at least one abutment surface (15) abutting against the engagement surface (16) of the gas inlet duct (4) for impeding a removal of the end section (6) from the gas inlet duct (4) after insertion of the end section (6) into the gas inlet duct (4).

2. Domestic appliance assembly to claim 1, wherein at least a terminal portion (17) of the locking element (7) is arranged within the gas inlet duct (4) with the end section (6) being inserted within the gas inlet duct (4);
wherein the locking element (7) locks the end section (6) and the terminal portion (17) within the gas inlet duct (4).

3. Domestic appliance assembly according to claim 1 or 2, wherein the locking element (7) is moveable and/or controllable between an active configuration at which the abutment surface (15) is adapted to abut against the engagement surface (16) and an inactive configuration for allowing an introduction and/or removal of the end section (6) into the gas inlet duct (4).

4. Domestic appliance assembly according to claim 3, wherein the locking element (7) comprises an interaction surface (30) configured to interact, during an insertion of the end section (6) into the gas inlet duct (4), with the gas inlet duct (4), in particular with an edge (31) of the gas inlet duct (4) so as to move the locking element (7) from the active configuration to the inactive configuration.

5. Domestic appliance assembly according to claim 3 or 4, wherein the locking element (7) is biased into the active configuration;
wherein, in use, the locking element (7) moves and/or is moveable from the active configuration to the inactive configuration during insertion of the end section (6) into the gas inlet duct (4) and is biased into the active configuration after insertion of the end section (6) within the gas inlet duct (4).

6. Domestic appliance assembly according to any one of claims 3 to 5, wherein the end portion (6) extends along a longitudinal axis (B);
wherein the abutment surface (15) is moveable into a direction (D1; D2) transversal to the longitudinal axis (B) for moving the locking element (7) between the active configuration and the inactive configuration.

7. Domestic appliance assembly according to any one of the preceding claims, wherein the locking element (7) comprises a coupling portion (18), in particular an annular and/or ring-shaped coupling portion, being in contact with an outer surface (19) of the end portion (6).

8. Domestic appliance assembly to claim 7, wherein the end section (6) comprises a first annular thickening (20) and a second annular thickening (21) being disposed, in particular axially disposed, from one another;
wherein the coupling portion (18) is arranged between the first annular thickening (20) and the second annular thickening (21), in particular for impeding an axial movement of the locking element (7).

9. Domestic appliance assembly according to claim 7 or 8, wherein the locking element (7) comprises at least one fin (23) connected to and extending from the coupling portion (18) and carrying and/or having the abutment surface (15).

10. Domestic appliance assembly according to claim 9, wherein the locking element (7) comprises a plurality of fins (23) each one connected to and extending from the coupling portion (18) and each one carrying one respective abutment surface (15) configured to abut against the engagement surface (16); in particular the fins (23) are equally spaced angularly around a central axis of the coupling portion (18).

11. Domestic appliance assembly according to any one of claims 7 to 10, wherein the coupling portion (18) and the end section (6) are coaxial to one another.

12. Domestic appliance assembly according to any one of claims 7 to 11, wherein the coupling portion (18) comprises a side cut (35) for allowing arrangement of the locking element (7) on the end portion (6).

13. Domestic appliance assembly according to any one of the preceding claims, wherein the gas inlet duct (4) comprises an inner groove (33) being at least partially delimited by the engagement surface (16).

14. Domestic appliance assembly according to any one of the preceding claims, wherein the gas inlet duct (4) comprises an opening (32) having a first radial extension and the inner groove (33) comprises a second radial extension being larger than the first radial extension.

## Patentansprüche

1. Haushaltsgeräteanordnung (1), umfassend ein Haushaltsgerät (2), das ein Gaskochherd oder eine Gaskochfeld mit einem Gaseinlasskanal (4) ist, der eine Eingriffsfläche (16) trägt und/oder aufweist, und eine Gasleitung (3), die mit dem Haushaltsgerät (2) gekoppelt ist;
wobei die Gasleitung (3) mindestens einen Rohrabschnitt (5) mit einem in den Gaseinlasskanal (4) eingesetzten Endabschnitt (6) umfasst;
die Haushaltsgeräteanordnung (1) **dadurch gekennzeichnet ist, dass** die Gasleitung (3) ein Verriegelungselement (7) umfasst, das mit dem Endabschnitt (6) verbunden ist und den Endabschnitt (6) innerhalb des Gaseinlasskanals (4) verriegelt;
wobei das Verriegelungselement (7) mindestens eine Anlagefläche (15) umfasst, die an der Eingriffsfläche (16) des Gaseinlasskanals (4) anliegt, um nach dem Einführen des Endabschnitts (6) in den Gaseinlasskanal (4) ein Entfernen des Endabschnitts (6) aus dem Gaseinlasskanal (4) zu verhindern.

2. Haushaltsgeräteanordnung nach Anspruch 1, wobei mindestens ein Abschlussteil (17) des Verriegelungselements (7) innerhalb des Gaseinlasskanals (4) angeordnet ist, wobei das der Endabschnitt (6) in den Gaseinlasskanal (4) eingesetzt ist;
wobei das Verriegelungselement (7) den Endabschnitt (6) und das Abschlussteil (17) innerhalb des Gaseinlasskanals (4) verriegelt.

3. Haushaltsgeräteanordnung nach Anspruch 1 oder 2, wobei das Verriegelungselement (7) zwischen einer aktiven Ausgestaltung, bei der die Anlagefläche (15) dazu ausgelegt ist, an der Eingriffsfläche (16) anzuliegen, und einer inaktiven Ausgestaltung bewegbar und/oder steuerbar ist, um ein Einführen und/oder Entfernen des Endabschnitts (6) in den Gaseinlasskanal (4) zu ermöglichen.

4. Haushaltsgeräteanordnung nach Anspruch 3, wobei das Verriegelungselement (7) eine Wechselwirkungsfläche (30) umfasst, die dazu ausgelegt ist, während eines Einführens des Endabschnitts (6) in den Gaseinlasskanal (4) mit dem Gaseinlasskanal (4), insbesondere mit einer Kante (31) des Gaseinlasskanals (4), zusammenzuwirken, um das Verriegelungselement (7) aus der aktiven Ausgestaltung in die inaktive Ausgestaltung zu bewegen.

5. Haushaltsgeräteanordnung nach Anspruch 3 oder 4, wobei das Verriegelungselement (7) in die aktive Ausgestaltung vorgespannt ist;
wobei sich das Verriegelungselement (7) beim Gebrauch während des Einführens des Endabschnitts (6) in den Gaseinlasskanal (4) aus der aktiven Ausgestaltung in die inaktive Ausgestaltung bewegt und/oder bewegbar ist und nach dem Einführen des Endabschnitts (6) in den Gaseinlasskanal (4) in die aktive Ausgestaltung vorgespannt wird.

6. Haushaltsgeräteanordnung nach einem der Ansprüche 3 bis 5, wobei sich das Endteil (6) entlang einer Längsachse (B) erstreckt;
wobei die Anlagefläche (15) in einer Richtung (D1; D2) quer zur Längsachse (B) bewegbar ist, um das Verriegelungselement (7) zwischen der aktiven Ausgestaltung und der inaktiven Ausgestaltung zu bewegen.

7. Haushaltsgeräteanordnung nach einem der vorhergehenden Ansprüche, wobei das Verriegelungselement (7) ein Kupplungsteil (18), insbesondere ein kreisringförmiges und/oder ringförmiges Kupplungsteil, umfasst, das mit einer Außenfläche (19) des Endteils (6) in Kontakt steht.

8. Haushaltsgeräteanordnung nach Anspruch 7, wobei der Endabschnitt (6) eine erste ringförmige Verdickung (20) und eine zweite ringförmige Verdickung (21) umfasst, die voneinander, insbesondere axial, angeordnet sind;
wobei das Kupplungsteil (18) zwischen der ersten ringförmigen Verdickung (20) und der zweiten ringförmigen Verdickung (21) angeordnet ist, insbesondere um eine axiale Bewegung des Verriegelungselements (7) zu verhindern.

9. Haushaltsgeräteanordnung nach Anspruch 7 oder 8, wobei das Verriegelungselement (7) mindestens eine Rippe (23) umfasst, die mit dem Kupplungsteil (18) verbunden ist und sich von diesem erstreckt und die Anlagefläche (15) trägt und/oder aufweist.

10. Haushaltsgeräteanordnung nach Anspruch 9, wobei das Verriegelungselement (7) eine Vielzahl von Rippen (23) umfasst, die jeweils mit dem Kupplungsteil (18) verbunden sind und sich von diesem erstrecken und jeweils eine betreffende Anlagefläche (15) tragen, die dazu ausgelegt ist, an der Eingriffsfläche (16) anzuliegen; wobei die Rippen (23) insbesondere in gleichem Winkelabstand um eine Mittelachse des Kupplungsteils (18) angeordnet sind.

11. Haushaltsgeräteanordnung nach einem der Ansprüche 7 bis 10, wobei das Kupplungsteil (18) und der Endabschnitt (6) koaxial zueinander sind.

12. Haushaltsgeräteanordnung nach einem der Ansprüche 7 bis 11, wobei das Kupplungsteil (18) einen Seitenausschnitt (35) umfasst, der die Anordnung des Verriegelungselements (7) am Endteil (6) ermöglicht.

13. Haushaltsgeräteanordnung nach einem der vorhergehenden Ansprüche, wobei der Gaseinlasskanal (4) eine innere Nut (33) umfasst, die mindestens teilweise durch die Eingriffsfläche (16) begrenzt wird.

14. Haushaltsgeräteanordnung nach einem der vorhergehenden Ansprüche, wobei der Gaseinlasskanal (4) eine Öffnung (32) mit einer ersten radialen Ausdehnung umfasst und die innere Nut (33) eine zweite radiale Ausdehnung umfasst, die größer als die erste radiale Ausdehnung ist.

## Revendications

1. Ensemble à appareil domestique (1), comprenant un appareil domestique (2) qui est une cuisinière à gaz ou une table de cuisson à gaz ayant une conduite d'entrée de gaz (4) supportant et/ou ayant une surface d'entrée en prise (16) et un tuyau de gaz (3) accouplé à l'appareil domestique (2) ;
le tuyau de gaz (3) comprend au moins une partie tubulaire (5) ayant une section d'extrémité (6) insérée dans la conduite d'entrée de gaz (4) ;
l'ensemble à appareil domestique (1) étant **caractérisé en ce que** le tuyau de gaz (3) comprend un élément de verrouillage (7) relié à la section d'extrémité (6) et verrouillant la section d'extrémité (6) à l'intérieur de la conduite d'entrée de gaz (4) ;
dans lequel l'élément de verrouillage (7) comprend au moins une surface de butée (15) venant en butée contre la surface d'entrée en prise (16) de la conduite d'entrée de gaz (4) pour empêcher un enlèvement de la section d'extrémité (6) à partir de la conduite d'entrée de gaz (4) après l'insertion de la section d'extrémité (6) dans la conduite d'entrée de gaz (4).

2. Ensemble à appareil domestique selon la revendication 1, dans lequel au moins une partie terminale (17) de l'élément de verrouillage (7) est agencée à l'intérieur de la conduite d'entrée de gaz (4) avec la section d'extrémité (6) insérée à l'intérieur de la conduite d'entrée de gaz (4) ;
dans lequel l'élément de verrouillage (7) verrouille la section d'extrémité (6) et la partie terminale (17) à l'intérieur de la conduite d'entrée de gaz (4).

3. Ensemble à appareil domestique selon la revendication 1 ou 2, dans lequel l'élément de verrouillage (7) est déplaçable et/ou commandable entre une configuration active dans laquelle la surface de butée (15) est adaptée pour venir en butée contre la surface d'entrée en prise (16) et une configuration inactive pour permettre une introduction et/ou un enlèvement de la section d'extrémité (6) dans la conduite d'entrée de gaz (4).

4. Ensemble à appareil domestique selon la revendication 3, dans lequel l'élément de verrouillage (7) comprend une surface d'interaction (30) configurée pour interagir, durant une insertion de la section d'extrémité (6) dans la conduite d'entrée de gaz (4), avec la conduite d'entrée de gaz (4), en particulier avec un bord (31) de la conduite d'entrée de gaz (4) afin de déplacer l'élément de verrouillage (7) de la configuration active à la configuration inactive.

5. Ensemble à appareil domestique selon la revendication 3 ou 4, dans lequel l'élément de verrouillage (7) est sollicité dans la configuration active ;
dans lequel, en utilisation, l'élément de verrouillage (7) se déplace et/ou est déplaçable de la configuration active à la configuration inactive durant l'insertion de la section d'extrémité (6) dans la conduite d'entrée de gaz (4) et est sollicité dans la configuration active après l'insertion de la section d'extrémité (6) à l'intérieur de la conduite d'entrée de gaz (4).

6. Ensemble à appareil domestique selon l'une quelconque des revendications 3 à 5, dans lequel la partie d'extrémité (6) s'étend le long d'un axe longitudinal (B) ;
dans lequel la surface de butée (15) est déplaçable dans une direction (D1; D2) transversale à l'axe longitudinal (B) pour déplacer l'élément de verrouillage (7) entre la configuration active et la configuration inactive.

7. Ensemble à appareil domestique selon l'une quelconque des revendications précédentes, dans lequel l'élément de verrouillage (7) comprend une partie d'accouplement (18), en particulier une partie d'accouplement annulaire et/ou en forme de bague, en contact avec une surface extérieure (19) de la partie d'extrémité (6).

8. Ensemble à appareil domestique selon la revendication 7, dans lequel la section d'extrémité (6) comprend un premier épaississement (20) et un second épaississement (21) disposés, en particulier axialement disposés, l'un par rapport à l'autre ;
dans lequel la partie d'accouplement (18) est agencée entre le premier épaississement (20) et le second épaississement (21), en particulier pour empêcher un déplacement axial de l'élément de verrouillage (7).

9. Ensemble à appareil domestique selon la revendication 7 ou 8, dans lequel l'élément de verrouillage (7) comprend au moins une ailette (23) reliée à et s'étendant depuis la partie d'accouplement (18) et supportant et/ou ayant la surface de butée (15).

10. Ensemble à appareil domestique selon la revendication 9, dans lequel l'élément de verrouillage (7) comprend une pluralité d'ailettes (23), chacune reliée à et s'étendant depuis la partie d'accouplement (18) et chacune supportant une surface de butée respective (15) configurée pour venir en butée contre la surface d'entrée en prise (16) ; en particulier les ailettes (23) sont angulairement espacées de façon égale autour d'un axe central de la partie d'accouplement (18).

11. Ensemble à appareil domestique selon l'une quelconque des revendications 7 à 10, dans lequel la partie d'accouplement (18) et la section d'extrémité (6) sont coaxiales l'une avec l'autre.

12. Ensemble à appareil domestique selon l'une quelconque des revendications 7 à 11, dans lequel la partie d'accouplement (18) comprend une découpe latérale (35) pour permettre l'agencement de l'élément de verrouillage (7) sur la partie d'extrémité (6).

13. Ensemble à appareil domestique selon l'une quelconque des revendications précédentes, dans lequel la conduite d'entrée de gaz (4) comprend une rainure intérieure (33) au moins partiellement délimitée par la surface d'entrée en prise (16).

14. Ensemble à appareil domestique selon l'une quelconque des revendications précédentes, dans lequel la conduite d'entrée de gaz (4) comprend une ouverture (32) ayant une première extension radiale et la rainure intérieure (33) comprend une seconde extension radiale plus grande que la première extension radiale.
